# EUROPÄISCHE PATENTANMELDUNG

(11) **EP 3 264 043 A1**
(43) Veröffentlichungstag der Anmeldung: **03.01.2018**
(21) Anmeldenummer: 17169435.9
(22) Anmeldetag: 04.05.2017
(51) Int. Cl.: G01C 21/32, G01S 5/02

(54) **VERFAHREN UND SYSTEM ZUR VERWENDUNG GEPARKTER FAHRZEUGE ALS LANDMARKEN ZUR VORTEILHAFTEN BEEINFLUSSUNG DER ROBUSTHEIT VON FAHRZEUGLOKALISIERUNGS-SYSTEMEN**

(30) Priorität: 28.06.2016 DE 102016211625
(71) Anmelder: Robert Bosch GmbH, 70442 Stuttgart (DE)
(72) Erfinder: Rohde, Jan, 70192 Stuttgart (DE); Banzhaf, Holger Andreas, 89150 Laichingen (DE)

(57) **Zusammenfassung**

Vorgeschlagen wird ein Verfahren zur Erstellung einer digitalen Karte zur Lokalisierung von sich bewegenden Kraftfahrzeugen, wobei mindestens ein stehendes Kraftfahrzeug als eine zur Lokalisierung vorgesehene Landmarke verwendet. Das stehende Kraftfahrzeug übermittelt hierbei als Landmarke eine Information über seine Position auf der digitalen Karte, insbesondere über seine Position relativ zu mindestens einer auf der digitalen Karte lokalisierten zweiten Landmarke an einen Server (20). Zusätzlich wird ein Server (20), welcher das Verfahren ausführt und ein System, welches den Server (20) umfasst, vorgeschlagen.

## Beschreibung

### Stand der Technik

Die Erfindung betrifft ein Verfahren, einen Server und ein den Server umfassendes System zur Erstellung einer digitalen Karte zur Lokalisierung von sich bewegenden Kraftfahrzeugen.

Das Dokument DE 10 2015 011 358 A1 beschreibt ein Verfahren zur Erstellung von aktuellen digitalen Daten zur Lokalisierung von Kraftfahrzeugen, bei dem geparkte Fahrzeuge als Landmarken verwendet werden können. Die parkenden Fahrzeuge werden durch vorbeifahrende Fahrzeuge erkannt und dann in die Karte mit aufgenommen. Die digitale Karte wird aktualisiert, wenn ein bestimmtes Entscheidungskriterium eintritt. Dies kann zum Beispiel das Erreichen eines bestimmten Alters der digitalen Karte darstellen oder das Erkennen einer erhöhten Lokalisierungsungenauigkeit, worauf die alte durch eine neue Karte ersetzt wird.

Aufgrund eines häufigen Standortwechsels der parkenden Fahrzeuge kann es jedoch zu einer häufig nötigen Änderung der digitalen Karte kommen, um eine nötige Lokalisierungsgenauigkeit noch zu garantieren. Im Falle der obigen Anmeldung müsste dann ein Fahrzeug immer wieder die Trajektorie abfahren, um die neuen Objekte auf der Karte zu erfassen, was einen großen Mehraufwand darstellt.

### Offenbarung der Erfindung

Um diesem Problem zu begegnen, werden ein Verfahren, ein Server, der das Verfahren ausführt und ein den Server umfassendes System zur Erstellung einer digitalen Karte zur Lokalisierung von sich bewegenden Kraftfahrzeugen vorgeschlagen.

Bei dem Verfahren zur Erstellung einer digitalen Karte zur Lokalisierung von sich bewegenden Kraftfahrzeugen wird mindestens ein stehendes Kraftfahrzeug als eine zur Lokalisierung vorgesehene Landmarke verwendet. Das stehende Kraftfahrzeug übermittelt hierbei als Landmarke eine Information über seine Position auf der digitalen Karte, insbesondere über seine Position relativ zu mindestens einer auf der digitalen Karte lokalisierten zweiten Landmarke an einen Server. Durch diese sogenannte Car-to-X Kommunikation können die stehenden Kraftfahrzeuge von sich aus ihren Standort übermitteln und müssen nicht erst, wie aus dem Stand der Technik bekannt, durch andere Kraftfahrzeuge erfasst werden. Hierdurch wird die Aktualität der digitalen Karte besser gewährleistet, was wiederum eine Erhöhung der Lokalisierungsgenauigkeit für die, die digitale Karte nutzenden, Kraftfahrzeuge zur Folge hat. Je mehr Landmarken von dem Krafttfahrzeug detektiert werden können und dann mit Umfeldinformationen der digitalen Karte abgeglichen werden können, desto höher wird die Lokalisierungsgenauigkeit. Mit stehenden Kraftfahrzeugen sind in diesem Zusammenhang Kraftfahrzeuge gemeint, die sich nicht bewegen. Das können also beispielsweise Kraftfahrzeuge darstellen, die von ihren Fahrern abgestellt wurden, damit diese das Kraftfahrzeug verlassen können, es können jedoch auch beispielsweise Kraftfahrzeuge gemeint sein, die gezwungenermaßen gerade zum Stehen gekommen sind. Dies kann zum Beispiel in einem Verkehrsstau der Fall sein, aber auch an Ampeln vorkommen. In manchen Verkehrssituationen, wie beispielsweise bei parkenden Kraftfahrzeugen kann es zu sogenannten Verdeckungseffekten kommen. Dabei werden Landmarken, die in der Umgebung der Fahrbahn angebracht sind und deren Position auf der digitalen Karte vermerkt sind, von den stehenden Kraftfahrzeugen verdeckt und können von anderen Kraftfahrzeugen zur Lokalisierung auf der digitalen Karte nicht detektiert werden. In diesem Fall ist es sogar notwendig, dass die stehenden Kraftfahrzeuge als Landmarken verwendet werden können, damit den sich bewegenden Kraftfahrzeugen überhaupt noch Landmarken zur Detektion zur Verfügung stehen, um sich auf der digitalen Karte zu lokalisieren.

Vorzugsweise ist die digitale Karte auf dem Server hinterlegt und wird an sich bewegende Kraftfahrzeuge übermittelt. Diese Car-to-X Kommunikation bietet den Vorteil, dass den sich bewegenden Kraftfahrzeugen ständig die aktualisierte Karte zur Verfügung steht und diese nicht separat auf einem Speicher im Kraftfahrzeug hinterlegt werden muss. Je mehr Landmarken von dem Kraftfahrzeug detektiert werden können und dann mit Umfeldinformationen der digitalen Karte abgeglichen werden können, desto höher wird die Lokalisierungsgenauigkeit.

Bevorzugt übermittelt das stehende Kraftfahrzeug Informationen an den Server, die dieses charakterisieren. Dies bietet den Vorteil, dass das stehende Kraftfahrzeug als Landmarke von sich bewegenden Kraftfahrzeugen eindeutig als Landmarke erkannt werden kann. Insbesondere übermittelt das stehende Kraftfahrzeug Informationen über dessen Geometrie an den Server. Die Geometrie des Kraftfahrzeugs ist ein Merkmal, das eine Unterscheidung gegenüber anderen Landmarkentypen, wie beispielsweise Straßenlaternen eindeutig möglich macht. Insbesondere im Fall dass die Erfassung der Landmarke mittels eines Farb-Kamerasystems erfolgt, übermittelt das stehende Kraftfahrzeug alternativ oder zusätzlich Informationen über dessen Farbe an den Server. Die Farbe des Kraftfahrzeugs ist ein Merkmal, welches gut dazu geeignet ist, das stehende Kraftfahrzeug als Landmarke gegenüber anderen stehenden Kraftfahrzeugen als Landmarke zu unterscheiden. Zwar können die stehenden Kraftfahrzeuge vom Grundton her die gleiche Farbe haben, der genaue Farbton oder Farbdetails am Fahrzeug unterscheiden sich jedoch sehr häufig. Insbesondere übermittelt das stehende Kraftfahrzeug alternativ oder zusätzlich Informationen über dessen Fahrzeugkennzeichen an den Server. Ein Fahrzeugkennzeichen ist einmalig und kann daher zur eindeutigen Unterscheidung gegenüber anderen stehenden Kraftfahrzeugen als Landmarke verwendet werden. Dazu muss das Kennzeichen des stehenden Fahrzeugs, beispielsweise durch eine Kamera erfassbar und das Kennzeichen durch entsprechende Bildverarbeitungsalgorithmen aus dem Kamerabild erkennbar sein.

Vorzugsweise wird in Abhängigkeit einer Signalerfassung, insbesondere abhängig von einer GPS-Signalerfassung, eine Bewegung des stehenden Kraftfahrzeugs erfasst. Das zuvor stehende Kraftzeug wird dabei als eine zur Lokalisierung vorgesehene Landmarke auf der digitalen Karte gelöscht, falls eine Bewegung erfasst wurde. Damit wird sichergestellt, dass nur Kraftfahrzeuge als Landmarken verwendet werden, deren Standorte statisch sind. Dies hat gegenüber sich bewegenden Kraftfahrzeugen als Landmarke den Vorteil, dass zum einen die Rechenleistung vermindert wird und die Lokalisierungsgenauigkeit erhöht wird. Durch die Bewegung des Kraftfahrzeugs können außerdem wieder statische Landmarken von anderen Kraftfahrzeugen detektiert werden, die zuvor von dem sich nun bewegenden Kraftfahrzeug verdeckt wurden.

Bevorzugt repräsentiert das parkende Kraftfahrzeug ein seitlich an einer Fahrbahn ohne Fahrbahnmarkierung parkendes Kraftfahrzeug. In dieser Situation treten oft Verdeckungseffekte auf, da die parkenden Kraftfahrzeuge andere Landmarken am Straßenrand verdecken. Den sich auf der Fahrbahn bewegenden Kraftfahrzeugen ist es durch das Fehlen der Fahrbahnmarkierungen nicht möglich andere Landmarken zu detektieren und sich an diesen zu orientieren. Mittels des geparkten Kraftfahrzeugs als Landmarke könnten sich bewegende Kraftfahrzeuge nun auch in solchen Verkehrssituationen orientieren. Alternativ repräsentiert das stehende Kraftfahrzeug ein auf einem Parkplatz seitlich oder hinter weiteren parkenden Kraftfahrzeugen parkendes Kraftfahrzeug. Auch dies stellt eine Situation dar, bei der oft Landmarken verdeckt sind. Mittels des geparkten Kraftfahrzeugs als Landmarke könnten sich bewegende Kraftfahrzeuge nun auch in solchen Verkehrssituationen orientieren.

Vorzugsweise repräsentiert das sich bewegende Kraftfahrzeug ein automatisch betriebenes Kraftfahrzeug. Beim autonomen Fahren ist das Detektieren von auf einer digitalen Karte lokalisierten Landmarken eine Möglichkeit für das Kraftfahrzeug, sich zu lokalisieren.

Die Erfindung umfasst zudem einen Server, der das Verfahren zur Erstellung einer digitalen Karte zur Lokalisierung von sich bewegenden Kraftfahrzeugen ausführt. Zusätzlich umfasst die Erfindung ein System, welches den erfindungsgemäßen Server, eine erste Steuereinheit, eine erste Recheneinheit, eine zweite Steuereinheit und eine zweite Recheneinheit umfasst. Die erste Steuereinheit ist dazu ausgebildet, ein erstes Erkennungssignal einzulesen und mittels des Erkennungssignals einen ersten Detektionsalgorithmus zu aktivieren. Die erste Recheneinheit ist dazu ausgebildet, mittels des ersten Detektionsalgorithmus zumindest eine zweite Landmarke zu detektieren und die zweite Landmarke zur Lokalisierung des stehenden Kraftfahrzeugs auf der digitalen Karte zu verwenden. Die zweite Steuereinheit ist dazu ausgebildet, ein zweites Erkennungssignal einzulesen und mittels des zweiten Erkennungssignals zumindest einen zweiten Detektionsalgorithmus zu aktivieren. Die zweite Recheneinheit ist dazu ausgebildet, mittels des zweiten Detektionsalgorithmus das stehende Kraftfahrzeug zu detektieren.

### Kurze Beschreibung der Zeichnungen

Figur 1 zeigt eine Ausführungsform des erfindungsgemäßen Systems zur Erstellung einer digitalen Karte zur Lokalisierung von sich bewegenden Kraftfahrzeugen.
Figur 2a zeigt einen Verfahrensablauf gemäß einer ersten Ausführungsform der Erfindung zur Erstellung einer digitalen Karte zur Lokalisierung von sich bewegenden Kraftfahrzeugen.
Figur 2b zeigt einen Verfahrensablauf gemäß einer zweiten Ausführungsform der Erfindung zur Erstellung einer digitalen Karte zur Lokalisierung von sich bewegenden Kraftfahrzeugen.
Figur 3 zeigt schematisch eine Draufsicht auf eine Situation, bei dem ein sich bewegendes Kraftfahrzeug, für das eine weitere Landmarke zur Detektion verdeckt ist, zwei schon lokalisierte parkende Kraftfahrzeuge zur Lokalisierung verwendet.

### Ausführungsbeispiele

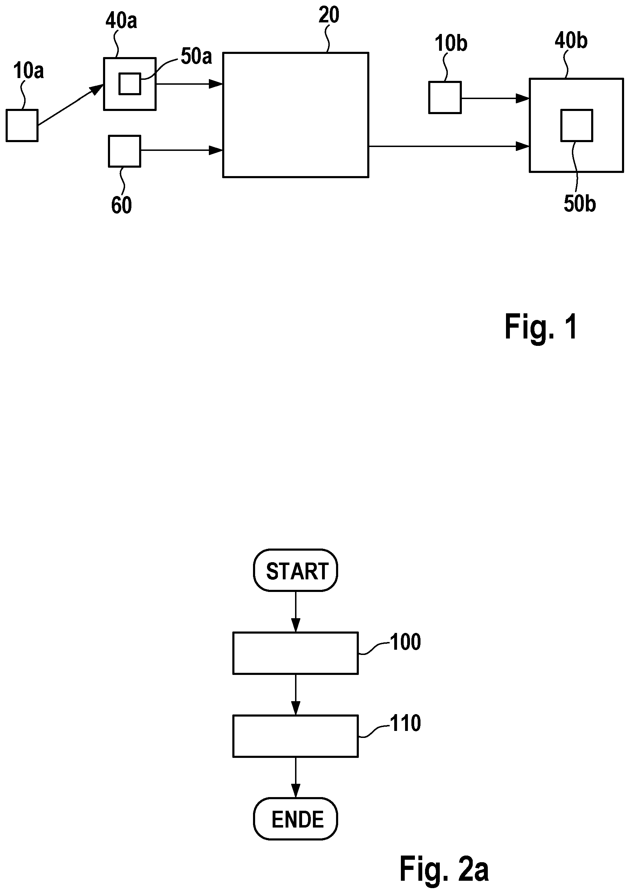

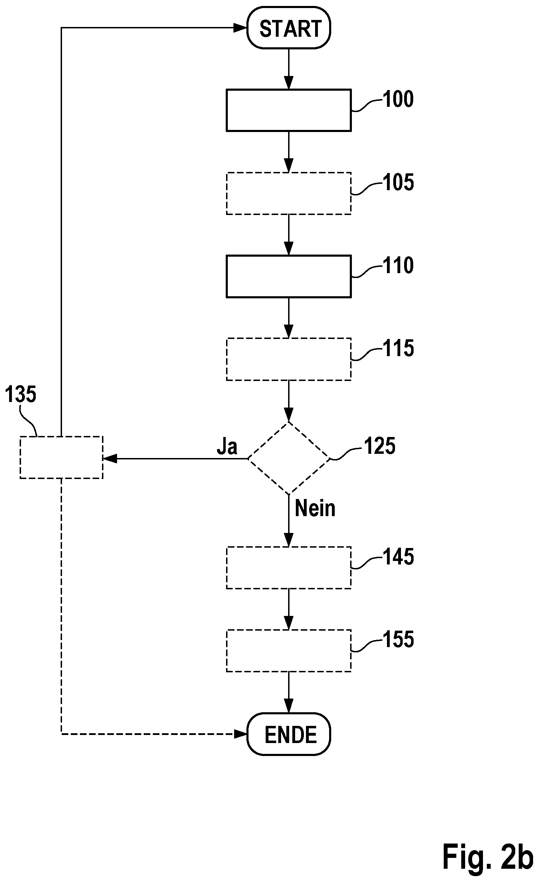

Das System zur Erstellung einer digitalen Karte zur Lokalisierung von sich bewegenden Kraftfahrzeugen gemäß Figur 1 umfasst eine erste Steuereinheit 40a, eine erste Recheneinheit 50a, eine zweite Steuereinheit 40b und eine zweite Recheneinheit 50b. Die erste Steuereinheit 40a dient zur Erfassung eines ersten Erkennungssignals, welches in diesem Ausführungsbeispiel von einer ersten Umfelderfassungseinheit 10a erfasst und an die Steuereinheit 40a übermittelt wird. Zusätzlich dient die erste Steuereinheit 40a zur Aktivierung eines ersten Detektionsalgorithmus. Die erste Recheneinheit 50a, welche auf dieser Figur in die erste Steuereinheit 40a integriert ist, dient zur Detektion zumindest einer zweiten Landmarke mittels des aktivierten ersten Detektionsalgorithmus. Die erste Steuereinheit 40a ist zur Lokalisierung eines stehenden Kraftfahrzeugs auf der digitalen Karte mittels der zweiten Landmarke und zur Übermittlung einer Information des stehenden Kraftfahrzeugs über seine Position auf der digitalen Karte, insbesondere über seine Position relativ zu mindestens einer auf der Karte lokalisierten zweiten Landmarke an den Server ausgebildet. Die zweite Steuereinheit 50b ist zum Einlesen eines zweiten Erkennungssignals, welches in diesem Ausführungsbeispiel von einer zweiten Umfeldeinleseeinrichtung 10b erfasst und an die Steuereinheit 40b weitergeleitet wird, ausgebildet. Zusätzlich dient die zweite Steuereinheit 40b zur Aktivierung eines zweiten Detektionsalgorithmus. Die zweite Recheneinheit 50b ist zur Detektion einen stehenden Kraftfahrzeugs mittels des aktivierten zweiten Detektionsalgorithmus ausgebildet. Die zweite Steuereinheit 40b dient zusätzlich zum Empfang einer digitalen Karte von dem Server und zur Lokalisierung eines sich bewegenden Kraftfahrzeugs mittels des lokalisierten stehenden Kraftfahrzeugs. Optional enthält das System einen Signalgeber 60, der dazu ausgebildet ist, ein Positions-Signal, insbesondere ein GPS-Signal von dem stehenden Kraftfahrzeug zu erzeugen. Der Server 20 führt die in den folgenden Figuren 2a und Figuren 2b dargestellten Ausführungsbeispiele eines erfindungsgemäßen Verfahrens aus.

Gemäß Figur 2a wird in einem mit "START" dargestellten Verfahrensschritt das Verfahren zur Erstellung einer digitalen Karte zur Lokalisierung von sich bewegenden Kraftfahrzeugen gestartet. In Verfahrensschritt 100 wird eine Information über die Position eines stehenden Kraftfahrzeugs, insbesondere über die Position des stehenden Kraftfahrzeugs relativ zu mindestens einer auf der digitalen Karte lokalisierten zweiten Landmarke an einen Server übermittelt. In dem darauf folgenden Verfahrensschritt 110 wird eine digitale Karte zur Lokalisierung von sich bewegenden Kraftfahrzeugen unter Verwendung des stehenden Kraftfahrzeugs als eine zur Lokalisierung vorgesehenen Landmarke erstellt. Das Verfahren wird daraufhin in einem mit "ENDE" dargestellten Verfahrensschritt beendet.

Im Verfahren gemäß Figur 2b übermittelt im Unterschied zum in Figur 2a dargestellten Verfahren in Verfahrensschritt 105 das stehende Kraftfahrzeug optional das stehende Kraftfahrzeug charakterisierende Informationen an den Server. Diese Informationen stellen insbesondere Informationen über die Geometrie des stehenden Kraftfahrzeugs und/oder die Farbe des stehenden Kraftfahrzeugs und/oder das Fahrzeugkennzeichen des stehenden Kraftfahrzeugs dar. Zusätzlich wird optional im Verfahrensschritt 115 die digitale Karte, welche auf dem Server hinterlegt ist, an das sich bewegende Kraftfahrzeug übermittelt. In dem optionalen Verfahrensschritt 125 wird abhängig von einer Signalerfassung, insbesondere abhängig von einer GPS-Signalerfassung, geprüft, ob eine Bewegung des stehenden Kraftfahrzeugs erfasst wird. Das zuvor stehende Kraftfahrzeug wird im optionalen Verfahrensschritt 135 als eine zur Lokalisierung vorgesehene Landmarke auf der digitalen Karte gelöscht, falls dabei eine Bewegung erfasst wurde. Falls das Kraftfahrzeug zu einem späteren Zeitpunkt erneut abgestellt wird, beginnt das Verfahren mit dem mit "START" dargestellten Verfahrensschritt wieder von vorne, andernfalls wird das Verfahren beendet. Falls keine Bewegung erfasst wird, erfolgt im optionalen Verfahrensschritt 145 die Detektierung des stehenden Kraftfahrzeugs als Landmarke durch das sich bewegende Kraftfahrzeug. Im optionalen Verfahrensschritt 155 wird das detektierte stehende Kraftfahrzeug dann durch das sich bewegende Kraftfahrzeug zur Lokalisierung auf der digitalen Karte verwendet. Das Verfahren wird daraufhin in einem mit "ENDE" dargestellten Verfahrensschritt beendet.

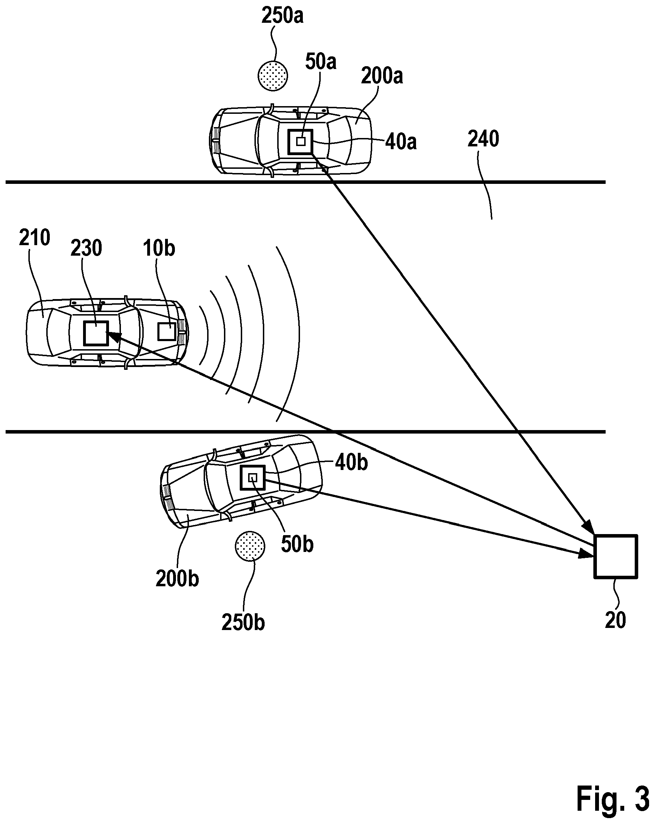

Figur 3 zeigt schematisch eine Draufsicht auf eine Situation, bei der ein sich bewegendes Kraftfahrzeug 210 ein erstes stehendes Kraftfahrzeug 200a und ein zweites stehendes Kraftfahrzeug 200b zur Lokalisierung auf einer digitalen Karte verwendet.

Das erste stehende Kraftfahrzeug 200a übermittelt mittels einer ersten Steuereinheit 40a eine Information über seine Position auf der digitalen Karte an den Server 20. Dies kann insbesondere eine Information über seine Position auf der digitalen Karte relativ zu einer zweiten Landmarke 250a, z.B. einer Straßenlaterne darstellen. Genauso übermittelt das zweite Kraftfahrzeug 200b mittels einer weiteren ersten Steuereinheit 40a eine Information über seine Position auf der digitalen Karte an den Server 20. Dies kann insbesondere eine Information über seine Position auf der digitalen Karte relativ zu einer zweiten Landmarke 250b darstellen. Der Server 20 übermittelt 115 die digitale Karte der zweiten Steuereinheit 40b des beispielsweise automatisch betriebenen, sich bewegenden Kraftfahrzeugs 210, welches sich auf der Fahrbahn ohne Fahrbahnmarkierung 240 bewegt. Dem sich bewegenden Kraftfahrzeug 210 sind die zweiten lokalisierten Landmarken 250a, 250b durch die stehenden Kraftfahrzeuge verdeckt. Bei den zweiten lokalisierten Landmarken kann es sich beispielsweise um statische Landmarken, wie beispielsweise Straßenlaternen handeln. Das zweite Kraftfahrzeug 210 erfasst mittels der Umfelderfassungseinheit 10b durch Signalwellen, wie beispielsweise Ultraschallwellen die zwei stehenden Kraftfahrzeuge 220a, 220b. Die Umfelderfassungseinheit 10b kann beispielsweise eine Ultraschallerfassungseinheit darstellen. Daraufhin kann das sich bewegenden Kraftfahrzeug 210 die zweiten stehenden Kraftfahrzeuge 200a, 200b mittels der zweiten Steuereinheit 40b und der zweiten Recheneinheit 50b detektieren und dann zur Lokalisierung auf der digitalen Karte verwenden.

## Patentansprüche

1. Verfahren zur Erstellung (110) einer digitalen Karte zur Lokalisierung von sich bewegenden Kraftfahrzeugen (210), wobei mindestens ein stehendes Kraftfahrzeug (200a, 200b) als eine zur Lokalisierung vorgesehene Landmarke auf der digitalen Karte verwendet wird, **dadurch gekennzeichnet, dass** das stehende Kraftfahrzeug (200a, 200b) als Landmarke eine Information über seine Position auf der digitalen Karte, insbesondere über seine Position relativ zu mindestens einer auf der digitalen Karte lokalisierten zweiten Landmarke (250a, 250b), an einen Server übermittelt (100).

2. Verfahren nach Anspruch 1, **dadurch gekennzeichnet, dass** die digitale Karte auf dem Server (20) hinterlegt ist, wobei die digitale Karte an sich bewegende Kraftfahrzeuge (210) übermittelt (115) wird.

3. Verfahren nach Anspruch 1 oder 2, **dadurch gekennzeichnet, dass** das stehende Kraftfahrzeug (200a, 200b) das stehende Kraftfahrzeug (200a, 200b) charakterisierende Informationen, insbesondere Informationen über
- die Geometrie des stehenden Kraftfahrzeugs (200a, 200b), und/oder
- die Farbe des stehenden Kraftfahrzeugs (200a, 200b), und/oder
- das Fahrzeugkennzeichen des stehenden Kraftfahrzeugs (200a, 200b) an den Server (20) übermittelt (105).

4. Verfahren nach einem der Ansprüche 1 bis 3, **dadurch gekennzeichnet, dass** abhängig von einer Signalerfassung, insbesondere abhängig von einer GPS-Signalerfassung, eine Bewegung des stehenden Kraftfahrzeugs (200a, 200b) erfasst wird, wobei das zuvor stehende Kraftfahrzeug (200a, 200b) als eine zur Lokalisierung vorgesehene Landmarke auf der digitalen Karte gelöscht wird, falls eine Bewegung erfasst wurde.

5. Verfahren nach einem der Ansprüche 1 bis 4, **dadurch gekennzeichnet, dass** das stehende Kraftfahrzeug (200a, 200b) ein
- seitlich an einer Fahrbahn ohne Fahrbahnmarkierung (240), oder
- auf einem Parkplatz seitlich zu oder hinter weiteren parkenden Kraftfahrzeugen
parkendes Kraftfahrzeugs repräsentiert.

6. Verfahren nach einem der Ansprüche 1 bis 5, **dadurch gekennzeichnet, dass** das sich bewegende Kraftfahrzeug (210) ein automatisch betriebenes Kraftfahrzeug repräsentiert.

7. Server (20) zur Erstellung (110) einer digitalen Karte zur Lokalisierung von sich bewegenden Kraftfahrzeugen (210), ausgebildet zur Ausführung eines Verfahrens nach einem der Ansprüche 1 bis 6, **dadurch gekennzeichnet, dass** der Server (20) ausgebildet ist, ein stehendes Kraftfahrzeug (200a, 200b) als eine zur Lokalisierung vorgesehene Landmarke auf der digitalen Karte zu verwenden.

8. Server nach Anspruch 7, **dadurch gekennzeichnet, dass** der Server (20) dazu ausgebildet ist, die digitale Karte an sich bewegende Kraftfahrzeuge (210) zu übermitteln (115).

9. Server (20) nach Anspruch 7 oder 8, **dadurch gekennzeichnet, dass** der Server (20) dazu ausgebildet ist, eine Information des stehenden Kraftfahrzeugs (200a, 200b) über seine Position auf der digitalen Karte, insbesondere über seine Position relativ zu mindestens einer auf der Karte lokalisierten zweiten Landmarke (250a, 250b), zu empfangen.

10. Server (20) nach einem der Ansprüche 7 bis 9, **dadurch gekennzeichnet, dass** der Server (20) dazu ausgebildet ist, das stehende Kraftfahrzeug (200a, 200b) charakterisierende Informationen, insbesondere Informationen über
- dessen Geometrie, und/oder
- dessen Farbe, und/oder
- dessen Fahrzeugkennzeichen
zu empfangen.

11. Server (20) nach einem der Ansprüche 7 bis 10, **dadurch gekennzeichnet, dass** der Server (20) dazu ausgebildet ist, ein Positions-Signal, insbesondere ein GPS-Signal von dem stehenden Kraftfahrzeug (200a, 200b) zu erfassen.

12. System zur Ausführung eines Verfahrens nach einem der Ansprüche 1 bis 6, wenigstens umfassend:
- Server (20) nach einem der Ansprüche 7 bis 11, und
- eine erste Steuereinheit (40a), die dazu ausgebildet ist, ein erstes Erkennungssignal einzulesen und mittels des Erkennungssignals zumindest ein ersten Detektionsalgorithmus zu aktivieren, und
- eine erste Recheneinheit (50a), die dazu ausgebildet ist, mittels des ersten Detektionsalgorithmus zumindest eine zweite Landmarke (250a, 250b) zu detektieren, und
- eine zweite Steuereinheit (50b), die dazu ausgebildet ist, ein zweites Erkennungssignal einzulesen und mittels des zweiten Erkennungssignals zumindest ein zweiten Detektionsalgorithmus zu aktivieren, und
- eine zweite Recheneinheit (40b), die dazu ausgebildet ist, mittels des zweiten Detektionsalgorithmus das stehende Kraftfahrzeug (200a, 200b) zu detektieren,
wobei die erste Steuereinheit (40a) dazu ausgebildet ist, die zweite Landmarke (250a, 250b) zur Lokalisierung des stehenden Kraftfahrzeugs (200a, 200b) auf der digitalen Karte zu verwenden und eine Information des stehenden Kraftfahrzeugs (200a, 200b) über seine Position auf der digitalen Karte, insbesondere über seine Position relativ zu mindestens einer auf der Karte lokalisierten zweiten Landmarke (250a, 250b), an den Server (20) zu übermitteln (100), wobei die zweite Steuereinheit (50b) dazu ausgebildet ist, die digitale Karte von dem Server (20) zu empfangen und das sich bewegende Kraftfahrzeug (210) mittels des lokalisierten stehenden Kraftfahrzeugs (200a, 200b) zu lokalisieren.

13. System nach Anspruch 12 mit einem zusätzlichen Signalgeber (60) zur Erzeugung eines Positions-Signal, insbesondere eines GPS-Signal von dem stehenden Kraftfahrzeug (200a, 200b).
